# EUROPEAN PATENT SPECIFICATION

(11) **EP 4 025 158 B1**
(45) Date of publication and mention of the grant of the patent: **31.01.2024**
(21) Application number: 20764973.2
(22) Date of filing: 28.08.2020
(51) Int. Cl.: A61C 17/02, F04B 1/00, F04B 53/06

(54) **AIR VENT ASSEMBLY FOR A PUMP**
ENTLÜFTUNGSANORDNUNG EINER PUMPE
ASSEMBLAGE DE VENTILATION D'UNE POMPE

(30) Priority: 03.09.2019 US 201962895015 P
(43) Date of publication of application: 13.07.2022
(73) Proprietor: Koninklijke Philips N.V., 5656 AG Eindhoven (NL)
(72) Inventor: PHAM, Le, Gia, 5656 AE Eindhoven (NL)
(74) Representative: Philips Intellectual Property & Standards
(86) International application number: PCT/EP2020/074133
(87) International publication number: WO 2021/043685

(56) References cited:
- WO-A1-00/06890
- WO-A1-84/03923
- JP-A- H0 979 402
- US-A- 6 152 705
- US-A1- 2006 112 941
- US-A1- 2012 168 359
- US-A1- 2014 259 474
- US-A1- 2018 171 998

## Description

### Field of the Invention

The present disclosure is directed to air vent assemblies, and in particular, to an air vent for a pump of an oral irrigator.

### Background

In oral irrigators, often there is a pump, which connects a fluid reservoir at one valve port and a handle with a nozzle at another valve port. The pump may be of any type but the reciprocating piston pump is the most common, consisting of a pump body, an inlet valve port, an outlet valve port and a piston-connecting rod assembly, which is driven by a motor and a gear train to deliver high-pressured fluid to the nozzle tip for oral cleaning.

For pump efficiency in volume delivery and fluidic pressure, there may be a valve in the inlet port, which opens mainly under suction and another valve at the outlet port, which opens only under compression. These inlet and outlet valves are constructed to ease pump priming but also with some undesired backflow. However, if contamination or inefficient volume delivery due to backflow are of concern, a strong spring valve is used at the outlet port to adjust sealing and prevent backflow.

Upon the spring pre-tension of the check valve and variation of the spring pretension due to tolerance stack, such a pump encounters difficulty in priming when there is only air in the system, such as when it is first out of the box for usage, or when the pump runs out of water supply for some time. The pump may also have different operating modes, selected by users, using different voltages making it more difficult for the pump to prime at low voltages. The pump keeps compressing air trapped inside the cylinder and the inlet tube until the build-up pressure cracks open the outlet spring valve to purge air. With a mini-pump, due to its limited compression capability, priming can either take a long time to occur or never happen.

Accordingly, there is a continued need in the art for improved pumps and related pump assemblies. US 2014/259474 A1 discloses a toothbrush with a fluid conduit connected to a pressurized, pulsed water source and a water jet nozzle. A poppet valve is included in the fluid system. US 2018/171998 A1 discloses a pump with a valve comprising a ring, a plug extending in the ring, and elastic strips formed between the plug and the ring so that the plug is movable relative to the ring.

### Summary of the Invention

The present disclosure is directed to air vent assemblies, and in particular, to an air vent for a pump of an oral irrigator. The air vent assemblies are arranged with a first internal chamber comprising a first valve which closes an exit channel out of the first internal chamber when fluid flows through the passages of the air vent assembly leading into the internal chamber. When gas flows through the passages of the air vent assembly, the pressure created by the gas is not enough to close the first valve and the exit channel leading out of the first internal chamber. Before enough fluid pressure is created to close the first valve, some fluid may escape the first internal chamber. When fluid flows out of the first internal chamber, it flows into a second internal chamber which comprises a blocking element. The blocking element has an inner portion which pushes fluid back to the first internal chamber and a frustoconical flange portion with an angled lip which also changes the momentum and velocity of any fluid to push the fluid back to the first internal chamber. At an end of the air vent assemblies, there is a cap containing a passage way which may comprise a second valve, such as a Gore mesh valve, which permits air to escape the passage way but not fluid. In this way, air can escape from the pump cylinder of a pump through the air vent assembly, but fluid will not escape from the air vent assembly.

Generally, in one aspect, an air vent assembly is provided. The air vent assembly comprises a body. The body comprises: a first internal chamber arranged between an input port and an outlet port of the body, wherein the first internal chamber is in fluid communication with the input port and the outlet port and arranged to receive a fluid or a gas. The first internal chamber comprises: a first inner surface, a first valve, and an exit channel. The first inner surface has a first inner surface portion and a second inner surface portion. The first valve comprises an expandable element, the first valve arranged to receive the fluid or the gas and transition from an open state to a closed state. The exit channel is in fluid communication with the first internal chamber, and arranged between the second inner surface portion of the first inner surface and the outlet port. The exit channel has a first exit aperture arranged within the second inner surface portion of the first inner surface of the first internal chamber. In the closed state, the first valve is arranged to contact the first exit aperture and impede a flow of the fluid or gas into the exit channel.

In an aspect, in the open state, the first valve is arranged at a distance from the first exit aperture of the exit channel and arranged to at least partially allow flow of the fluid or the gas into the exit channel.

In an aspect, in the open state, the fluid or the gas exerts a first pressure on the first valve, and in the closed state, the fluid or the gas exerts a second pressure on the first valve.

In an aspect, the first valve comprises the expandable element having an external surface. The external surface is arranged to contact at least a portion of an inner surface of a housing of the first valve, and an outer surface of the housing of the first valve is arranged to contact at least a portion of the first exit aperture of the exit channel in the closed state.

In an aspect, the assembly body comprises one or more radially disposed cross channels arranged between the first valve and a first internal passage in fluid communication with the first valve, the first internal passage having a first end comprising the inlet port and a second end comprising a lip. The cross channels are formed by indentations on the lip. The expandable element of the first valve and the housing of the first valve are arranged on the lip, and the cross channels are in fluid communication with the first internal passage and the first internal chamber.

In an aspect, the assembly body comprises a second internal chamber arranged between the exit channel and the outlet port and in fluid communication with the exit channel and the outlet port.

In an aspect, the outlet port comprises a second valve.

In an aspect, the second internal chamber comprises a blocking element arranged between the exit channel and a second internal passage. The second internal passage has a first end in fluid communication with the second internal chamber and a second end in fluid communication with the outlet port.

In an aspect, the blocking element comprises a frustoconical flange portion arranged to prevent the fluid from flowing past the frustoconical flange portion.

In an aspect, the blocking element comprises an inner portion arranged at a distance from the exit channel.

Generally, in one aspect, an oral irrigator system is provided. The oral irrigator system comprises: a pump in fluid communication with a reservoir and a channel of the oral irrigator, the pump comprising a pump cylinder in which a pressurized flow is created; and an air vent assembly having an input port in fluid communication with the pump cylinder. The air vent assembly comprises: a body. The body comprises: a first internal chamber arranged between the input port and an outlet port of the body, wherein the first internal chamber is in fluid communication with the input port and the outlet port and arranged to receive a fluid or a gas, the first internal chamber comprising: a first inner surface having a first inner surface portion and a second inner surface portion; and a first valve comprising an expandable element, the first valve arranged to receive the fluid or the gas and transition from an open state to a closed state; an exit channel in fluid communication with the first internal chamber, and arranged between the second inner surface portion of the first inner surface and the outlet port, the exit channel having a first exit aperture arranged within the second inner surface portion of the first inner surface of the first inner chamber. In the closed state, the first valve is arranged to contact the first exit aperture and impede a flow of the fluid or gas into the exit channel.

In an aspect, in the open state, the first valve is arranged at a distance from the first exit aperture of the exit channel and arranged to at least partially allow flow of the fluid or the gas into the exit channel.

In an aspect, the first valve comprises the expandable element having an external surface, wherein the external surface is arranged to contact at least a portion of an inner surface of a housing of the first valve, and an outer surface of the housing of the first valve is arranged to contact at least a portion of the first exit aperture of the exit channel in the closed state.

In an aspect, the assembly body comprises one or more radially disposed cross channels arranged between the first valve and a first internal passage in fluid communication with the first valve, the first internal passage having a first end comprising the inlet port and a second end comprising a lip. The cross channels are formed by indentations on the lip. The expandable element of the first valve and the housing of the first valve are arranged on the lip. The cross channels are in fluid communication with the first internal passage and the first internal chamber.

In an aspect, the assembly body comprises a second internal chamber arranged between the exit channel and the outlet port and in fluid communication with the exit channel and the outlet port, and the second internal chamber comprises a blocking element arranged between the exit channel and a second internal passage. The second internal passage has a first end in fluid communication with the second internal chamber and a second end in fluid communication with the outlet port.

### Brief Description of the Drawings

In the drawings, like reference characters generally refer to the same parts throughout the different views. Also, the drawings are not necessarily to scale, emphasis instead generally being placed upon illustrating the principles of the invention.
FIG. 1 is a schematic representation of an air vent assembly according to aspects of the present disclosure.
FIG. 2 is a cross sectional view of an air vent assembly according to aspects of the present disclosure.
FIG. 3 is a cross sectional view of a first internal chamber of an air vent assembly according to aspects of the present disclosure.
FIG. 4 is a cross sectional view of a first internal chamber of an air vent assembly according to aspects of the present disclosure.
FIG. 5 is a schematic representation of cross channels on a first internal passage of an air vent assembly according to aspects of the present disclosure.
FIG. 6 is a cross sectional view of cap and upper portion of an air vent assembly according to aspects of the present disclosure.
FIG. 7 is a cross sectional view of a second internal chamber of an air vent assembly according to aspects of the present disclosure.
FIG. 8 is a schematic representation of an oral irrigator system according to aspects of the present disclosure.
FIG. 9 is a cross sectional view of an air vent assembly in an open state according to aspects of the present disclosure.
FIG. 10 is a cross sectional view of an air vent assembly in a closed state according to aspects of the present disclosure.

### Detailed Description

When the pump of an oral irrigator is primed, for example, when the pump is first turned on or the reservoir has run out of fluid, there may not be fluid in the cylinder of the pump. The gas in the pump cylinder, which is being pressurized by the pump, may not create enough pressure to open an outlet valve of the pump, for example, a spring valve, through which gas and/or fluid enters the channels of the oral irrigator, or the pressurized gas may take too long to open the outlet valve of the pump to allow flow of gas out of the pump and flow of fluid into the pump. The present disclosure is directed to an air vent assembly which connects to the pump cylinder of an oral irrigator to allow air to escape from the pump cylinder and minimize fluid releasing from the air vent assembly.

The air vent assembly is arranged with a first internal chamber comprising a first valve which closes an exit channel out of the first internal chamber when fluid flows through the passages of the air vent assembly leading into the internal chamber. When gas flows through the passages of the air vent assembly, the pressure created by the gas is not enough to close the first valve and the exit channel leading out of the first internal chamber. Before enough fluid pressure is created to close the first valve, some fluid may escape the first internal chamber. When fluid flows out of the first internal chamber, it flows into a second internal chamber which comprises a blocking element. The blocking element has an inner portion which pushes fluid back to the first internal chamber and a frustoconical flange portion with an angled lip which also changes the momentum and velocity of any fluid to push the fluid back to the first internal chamber. At the end of the air vent assemblies, there is a cap containing a passage which may comprise a second valve, such as a Gore mesh valve, which permits air to escape the passage but not fluid. In this way, air can escape from the pump cylinder of a pump through the air vent assembly, but the release of fluid out of the air vent assembly will be inhibited.

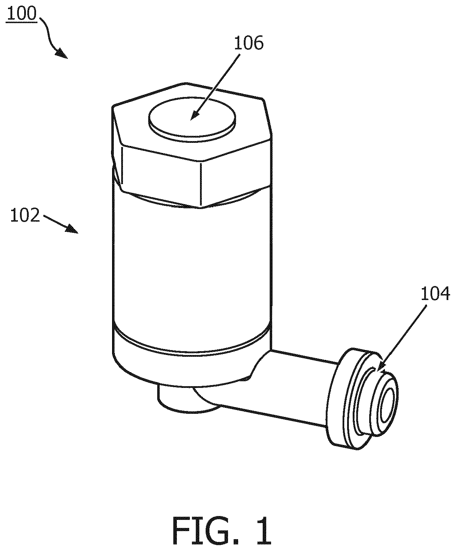

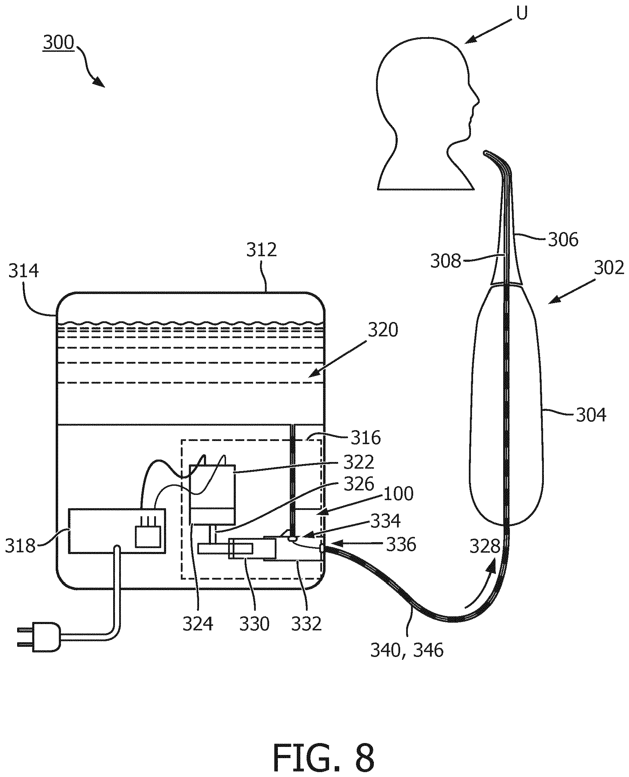

FIG. 1 shows an air vent assembly 100 having a body 102, an input port 104, and an outlet port 106. The air vent assembly 100 is arranged to vent air from a pump cylinder 332 of a pump 316 (shown in FIG. 8), for example, a reciprocating piston pump. The input port 104 connects to the pump cylinder 332 of the pump 316 and as in fluid communication with the pump cylinder 332.

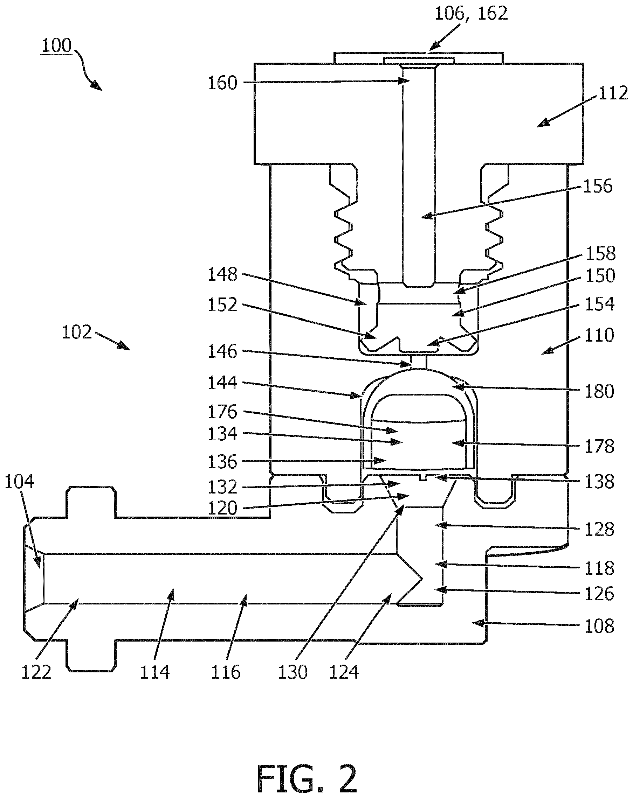

FIG. 2 shows a cross section of the air vent assembly 100. The air vent assembly 100 comprises a lower portion 108, an upper portion 110, and a cap 112. The lower portion 108 comprises the input port 104 which is integrally connected to and in fluid communication with a first internal passage 114. The first internal passage 114 has a horizontal portion 116, a vertical portion 118, and a chamfered portion 120. The horizontal portion 116 has a first end 122 and a second end 124. The first end 122 of the horizontal portion 116 is in fluid communication with the input port 104, and the second end 124 of the horizontal portion 116 is in fluid communication with the first end 126 of the vertical portion 118. The second end 128 of the vertical portion 118 of the first internal passage 114 is in fluid communication with the chamfered portion 120 of the first internal passage 114. The first internal passage 114 may have a narrower horizontal portion 116 than the vertical portion 118. For example, the horizontal portion 116 may be approximately 1 to 1.25 millimeters in diameter, and the vertical portion 118 may be approximately 1.5 millimeters in diameter. The cap 112 may be assembled to connect to the upper portion 110 using threads and a lock to keep the threads fastened. As example, an O-ring may be used to connect the cap 112 to the upper potion 110.

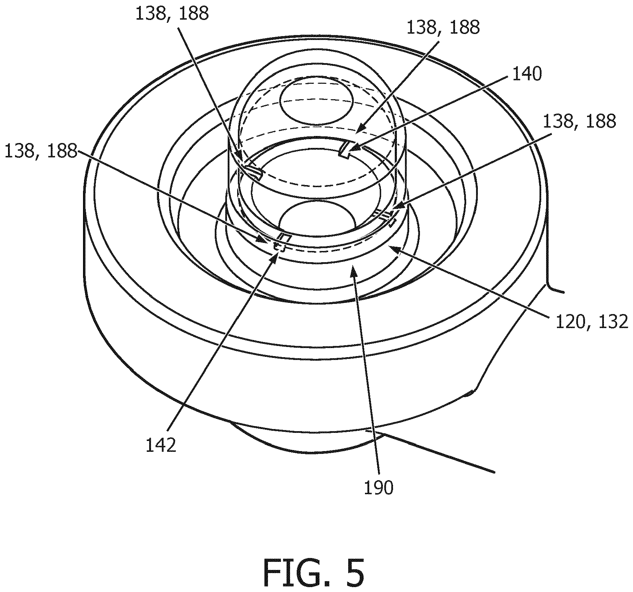

The chamfered portion 120 of the first internal passage 114 connects to the vertical portion 118 of the first internal passage 114 on one end and the first valve 134 on another end. The chamfered portion 120 has a first end 130 and a second end 132. The first end 130 of the chamfered portion 120 is in fluid communication with the vertical portion 118 of the first internal passage 114. The second end 132 of the chamfered portion 120 is in fluid communication with a first end 136 of a first valve 134 and one or more cross channels 138. The cross channels 138 have a first end 140 and a second end 142 (shown in FIG. 5). The second end 142 of the cross channels 138 and the first valve 134 are arranged in a first internal chamber 144 of the air vent assembly 100. The first internal chamber 144 is in the upper portion 110 of the body 102 of the air vent assembly 100. The first internal chamber 144 is in fluid communication with an exit channel 146 which is in fluid communication with a second internal chamber 148.

The second internal chamber 148 comprises a blocking element 150 having a frustoconical flange portion 152 and an inner portion 154 located at a distance from the exit channel 146. The second internal chamber 148 is in fluid communication with a second internal passage 156 arranged within the cap portion 112 of the air vent assembly 100. The second internal passage 156 has a first end 158 in fluid communication with the second internal chamber 148 and a second end 160 in fluid communication with a second valve 162. The second valve 162 is arranged on the outlet port 106. The second valve 162 may be, for example, a Gore mesh valve and may be adhered to the cap 112 by pressure sensitive adhesives.

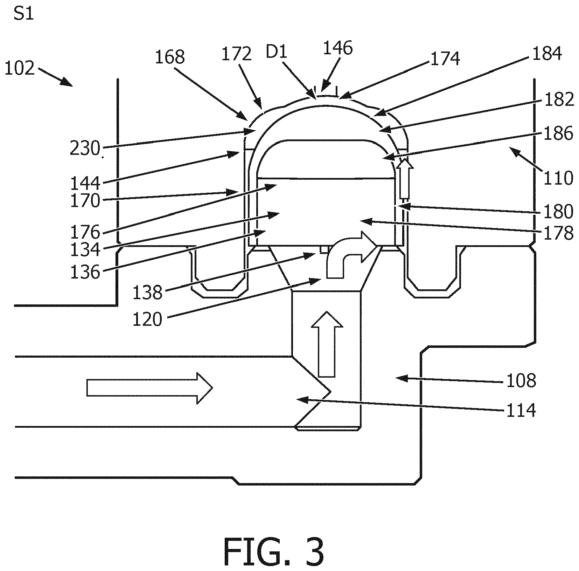

FIG. 3 shows the first internal chamber 144 which is created by a cavity in the upper portion 110 of the body 102 where the lower portion 108 and the upper portion 110 of the body 102 are connected. The two portions 108/110 can be connected, for example, by using an adhesive and a grooved connection. The first internal chamber 144 is in fluid communication with the input port 104 via the first internal passage 114 and in fluid communication with the exit channel 146. The first internal chamber 144 has a first inner surface 168 having a first inner surface portion 170 and a second inner surface portion 172. A first exit aperture 174 of the exit channel 146 is arranged on or within the second inner surface portion 172 of the first inner surface 168 of the first internal chamber 144. A fluid or gas can flow from the first internal chamber 144 to the exit channel 146 via the first exit aperture 174.

The first internal chamber 144 further comprises a first valve 134. The first valve 134 has a first end 136 which is in fluid communication with the first internal passage 114 and a second end 176 on which an expandable element 178 and housing 180 are arranged. The expandable element 178 is arranged to receive the fluid or the gas. The first valve 134 also has a housing 180 having an inner surface 182 and an outer surface 184. An external surface 186 of the expandable element 178 is arranged to contact at least a portion of an inner surface 182 of the housing 180 of the first valve 134 as it expands. The first valve 134 may be a rubber valve and the expandable element 178 may have walls that are approximately 0.5 mm thick or less, based on the minimum manufactural thickness of the material used, and a thicker top section. The clearance between the expandable element 178 and the valve housing 180, when the first valve 134 is in the open state S1, at the top of the expandable element 178 may be approximately 0.1 mm or as small as possible, based on manufacturing ability, to still allow the first valve to move freely to seal the exit channel 146. The weight of the first valve may be less than or equal to the water pressure force from the pump acting on the first valve, which permits the rubber valve to be lifted up to seal the exit channel 146.

In an open state S1 (shown in FIG. 3) of the first valve 134, the fluid and/or the gas flowing from the first internal passage 114 exert a first pressure P1 on the first valve 134. The first pressure P1 exerted on the first valve 134 may not cause the expandable element 178 to expand. Alternatively, the first pressure P1 may cause the expandable element 178 to expand such that the external surface 186 contacts at least a portion of an inner surface 182 of the housing 180. The housing 180 is arranged to move as the expandable element 178 expands. In the open state S1, the outer surface 184 of the housing 180 of the first valve 134 remains at a first distance from the first exit aperture 174 of the exit channel 146 so that the gas and/or the fluid can flow from the first internal chamber 144 to the exit channel 146.

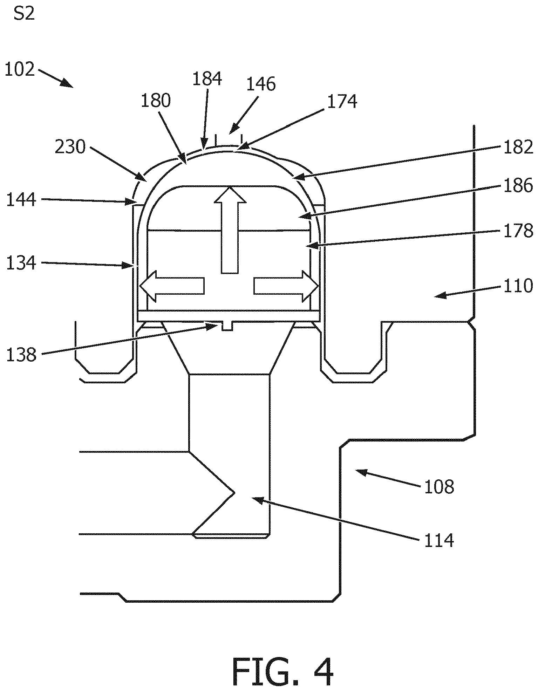

In a closed state of the first valve (shown in FIG. 4), the fluid and/or the gas flowing from the first internal passage 114 exert a second pressure P2 on the first valve 134. Under the second pressure P2 exerted on the first valve 134, the expandable element 178 expands such that the external surface 186 of the expandable element 178 contacts at least a portion of the inner surface 182 of the movable housing 180 and the outer surface 184 of the housing 180 now makes contact with the first exit aperture 174 to prevent the flow of the gas and/or the fluid from the first internal chamber 144 to the exit channel 146.

As can be seen in FIGS. 3-5, one or more radially disposed cross channels 138 are arranged between the first end 136 of the first valve 134 and the chamfered portion 120 of the first internal passage 114. The cross channels 138 have a first end 140 which is in fluid communication with the first internal passage 114 and a second end 142 which is in fluid communication with the first internal chamber 144. When the upper portion 110 of the body 102 is connected to the lower portion 108 of the air vent assembly 100, a cavity in the upper portion 110 creates the first internal chamber 144. The gas and/or the fluid can flow from the first internal passage 114, through the one or more cross channels 138 and into the first internal chamber 144, and into the space created between the housing 180 of the first valve 134 and the first inner surface 168 of the first internal chamber 144, first internal space 230. These cross channels 138 allow air escape when the first valve 134 is closed enabling priming at low pressure. As shown in FIG. 5, the one or more radially disposed cross channels 138 are created by indentations 188 or cut outs in a lip 190 on the chamfered portion 120 of the first internal passage 114. The first valve 134, the expandable element of the first valve 178, and the housing 180 of the first valve 134 make contact with the lip 190 on the second end 132 of the chamfered portion 120 such that the gas or the fluid can flow from the first internal passage 114 into the first internal chamber 144 when the first valve 134 is open or the first valve 134 is closed.

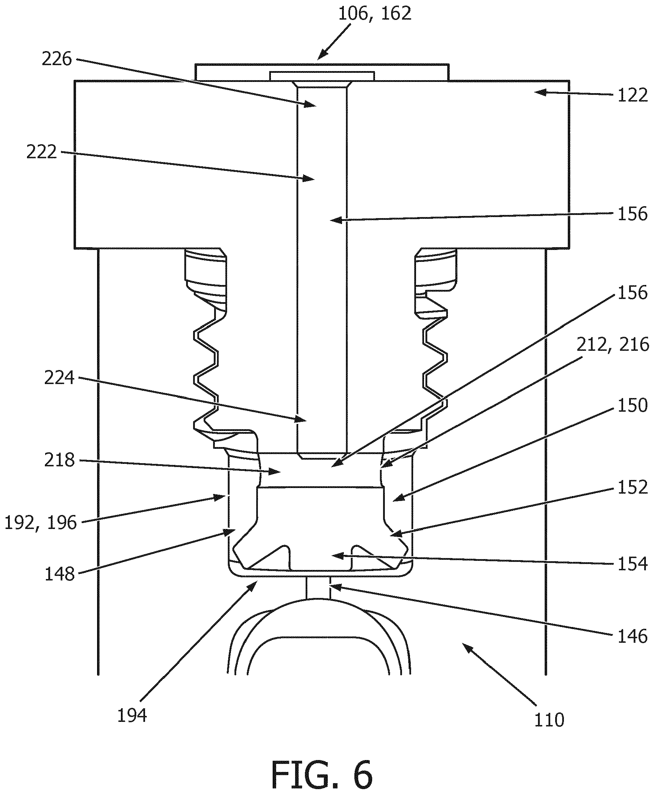

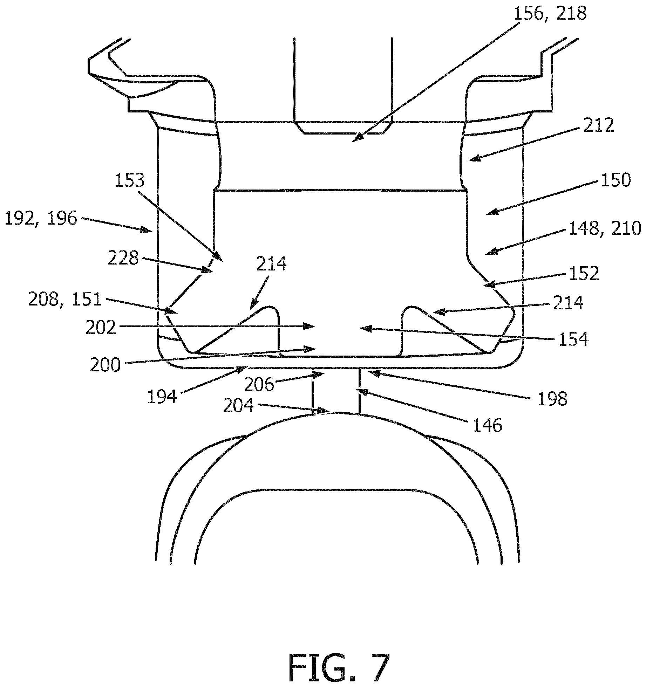

FIG. 6 and FIG. 7 show the second internal chamber 148, which is arranged between the exit channel 146 and the outlet port 106 and is in fluid communication with the exit channel 146 and the outlet port 106. The second internal chamber 148 has a second inner surface 192 which comprises a first portion 194 and a second portion 196. The first portion 194 of the second inner surface 192 of the second internal chamber 148 has a second exit aperture 198 which leads into the exit channel 146. The second internal chamber 148 has a blocking element 150 comprising a frustoconical flange portion 152 and an inner portion 154 which are integrally connected. The inner portion 154 has a first end 200 and a second end 202 (shown in FIG. 7). The first end 200 of the inner portion 154 of the blocking element 150 is arranged at a distance from a second exit aperture 198 on the second end 206 of the exit channel 146. This distance may be small, for example, approximately 0.3 millimeters. The second end 202 of the inner portion 154 of the blocking element 150 is integrally connected to the frustoconical flange portion 152 of the blocking element 150. The frustoconical flange portion 152 has a first end 151 and a second end 153. The first end 151 of the frustoconical flange portion 152 is connected to the inner portion 154 and has a frustoconical surface 214. The frustoconical surface 214 creates an angled lip 228 which faces the first portion 194 of the second inner surface 192 of the second internal chamber 148. The angled lip 228 has an outermost end 208 which is arranged at the end of the frustoconical flange portion 152 which is closest to the first portion 194 of the second inner surface 192 of the second internal chamber 148. The outermost end 208 is arranged at a distance from the first portion 194 of the second inner surface 192 and at a distance from the second portion 196 of the second inner surface 192 so that a second passage space 210 is created between the blocking element 150 and the second inner surface 192 of the second internal chamber 148 through which gas or fluid can flow. This distance may be small, for example approximately 0.2 millimeters. The second internal chamber 148 also has an entry way 212 to the second internal passage 156 which is in fluid communication with the second internal passage 156 and the second internal chamber 148.

The second internal passage 156 is in the cap 112 of the air vent assembly 100 and has first end 216 which contains the entry way 212 from the second internal chamber 148. A horizontal portion 218 connects to the entry way 212 and is in fluid communication with the entry way 212 and second internal chamber 148. A vertical portion 222 of the second internal passage 214 is in fluid communication with the horizontal portion 218 at a first end 224 of the vertical portion 222. The second end 226 of the vertical portion 222 may contain a second valve 162 and the outlet port 106. The second internal passage 156 may be narrow, for example, having diameter ranging from approximately 0.8 to 1 millimeters, to permit air to escape but limit fluid passage.

Referring to the figures, FIG. 8 is a schematic illustration of an oral irrigator system 300 having an air vent assembly 100. Oral irrigator 300 includes irrigator tip 302 having a handle portion 304 and a nozzle portion 306. Irrigator tip 302 further includes a first channel 308, which extends within and through the nozzle portion 306 and the handle portion 304. Oral irrigator 300 further includes housing 312 which contains reservoir 314, pump 316, and power supply 318. Reservoir 314 contains a volume of fluid 320 which during operation of oral irrigator 300 is directed through irrigator tip 302 into the mouth of user U. Pump 316 comprises motor 322, gear train 324, connecting rod 326, and piston 330. Motor 322, gear train 324, connecting rod 326, and piston 330 work in concert to create a pressurized environment in the pump cylinder 332 that facilitates flow 328 from reservoir 314, through an inlet valve port 334 of pump 316, out an outlet valve port 336 of pump 316, and into tether 340, into irrigator tip 302, and into user U's mouth. Tether 340 functions as a conduit through which flow 328 of fluid 320 proceeds from reservoir 314 to irrigator tip 302 and into user U's mouth for cleaning, through the first channel 308 and the second channel 346. Fluid 320 can be selected from, for example, water, a water-gas mixture, oral cleansing concentrate, standard or antiseptic (alcohol based) mouthwash, or any fluid 320 with a viscosity low enough to proceed through the first channel 308 and second channel 346.

The outlet valve port 336 of pump 316 contains an outlet valve 338 (not shown in Figures), for example, a spring valve, which requires a threshold pressure to be opened. When the pump 316 is first turned on or after the reservoir 314 has been depleted of fluid 320 and when there is gas in the pump cylinder 332, the movement of the gas due to the motor 322 may not create enough pressure to open the outlet valve 338, or it may take a long time to open the outlet valve 338. Placement of air vent assembly 100 to vent air from the pump cylinder 332 allows the air to be removed from the pump cylinder 332 and replaced with fluid 320. The fluid 320 which fills the pump cylinder 332 can then create a threshold pressure to open the outlet valve 338.

The input port 104 of the air vent assembly 100 can connect to the pump cylinder 332 by a variety of means, including for example, by using a strong adhesive or using molded threads. As an example, air vent assembly 100 may connect to the pump cylinder 332 vertically, such that an imaginary axis running through the center of the cap 112 portion and the upper portion 110 of the body 102 of the air vent assembly 100 is substantially perpendicular to the ground. As another example, air vent assembly 100 may connected to the pump cylinder 332 at an angle, such that an imaginary axis running through the center of the cap 112 portion and the upper portion 110 of the body 102 of the air vent assembly 100 is at an angle to another imaginary axis perpendicular to the ground.

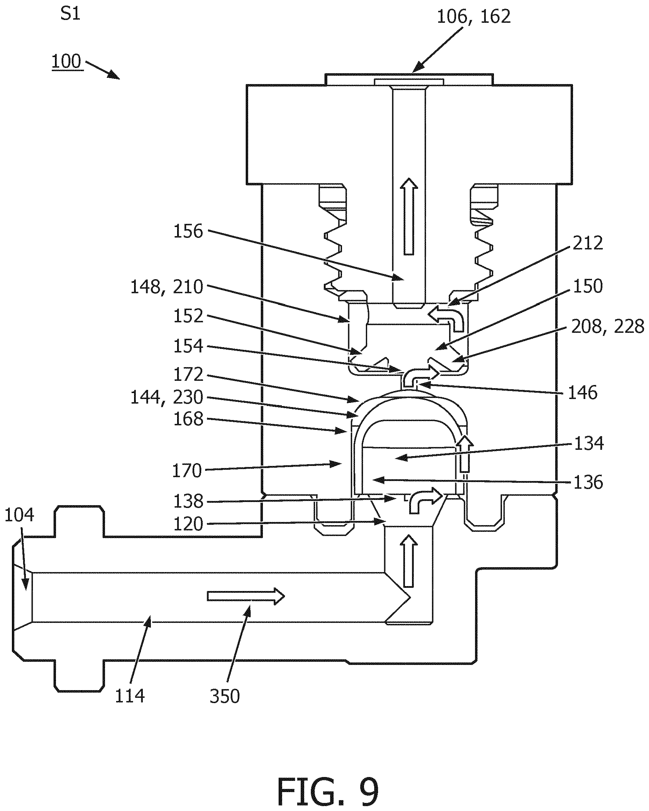

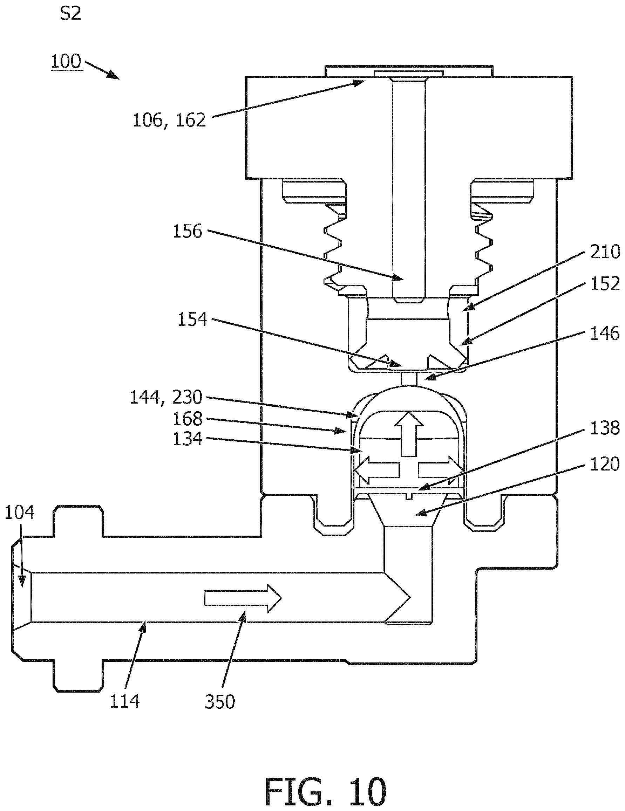

The description and illustrations of FIGs. 9 and 10 are intended to be read in view of the description and illustrations of FIGs. 1-8. As shown in FIG. 9, during operation of the air vent assembly 100, air and/or fluid (illustrated by white arrows 350) can flow from the pump cylinder 332, through the input port 104, and through the first internal passage 114, through the horizontal portion 116, the vertical portion 118, and then the chamfered portion 120. The air and/or fluid flowing from the first internal passage 114 flows through the one or more cross channels 138 and into the first internal space 230 created in the first internal chamber 144 between the first valve 134 and the first inner surface 168 of the first internal chamber 144. The air and/or fluid flowing from the first internal passage 114 also creates a first pressure P1 on the first end 136 of the first valve 134. In an open state S1 of the first valve 134, the first pressure P1 is not enough to move the housing 180 of the first valve 134 to completely block the first exit aperture 174 of the exit channel 146 on the second inner surface portion 172 of the first internal chamber 144. The air and/or fluid flows out of the second end 142 of the cross channels 138 and into the first internal space 230 in the first internal chamber 144.

Gas can flow from the cross channels 138, through the first internal space 230, into the exit channel 146, and into the second internal chamber 148. For fluid 320 to flow into the second internal chamber 148, enough of a volume of fluid 320 must enter the first internal chamber 144 to fill the first internal space 230 in the first internal chamber 144, first in the portion of the first internal chamber 144 which touches the first inner surface portion 170 of the first internal chamber 144 and then into the space in the first internal chamber 144 which is located between the second inner surface portion 172 of the first internal chamber 144 and the outer surface 184 of the housing 180 of the first valve 134. Only once a large enough volume of fluid 320 is in the first internal chamber 144 can the fluid 320 enter the exit channel 146 and then the second internal chamber 148.

In the open state S1 of the first valve 134 (shown in FIG. 9), gas and/or liquid can enter the second internal chamber 148. A gap exists between the blocking element 150 and the second exit aperture 198 of the exit channel 146 so that gas and, to a lesser extent, liquid 320 can flow past the inner portion 154 of the blocking element 150. Gas can move past the inner portion 154 of the blocking element 150 and in the space between the frustoconical flange portion 152 of the blocking element 150 and the first portion 194 of the second inner surface 192 of the second internal chamber 148. Gas can also move past the angled lip 228 portion of the frustoconical flange portion 152 in the gap between the outermost end 208 of the frustoconical flange portion 152 and the first portion 194 of the second inner surface 192 of the second internal chamber 148 and in the gap between the outermost end 208 of the frustoconical flange portion 152 and the second portion 196 of the second inner surface 192 of the second internal chamber 148. It is harder for liquid to move past the angled lip 228 portion of the frustoconical flange portion 152 because of the angle and shape of the frustoconical flange portion 152. The angled lip 228 portion pushes fluid 320 away from the second portion 196 of the second inner surface 192 of the second internal chamber 148. Gas in the second internal chamber 148 can move from the second passage space 210 into the entry way 212 of the second internal passage 156, through the second internal passage 156, and out the outlet port 106. Fluid 320 in the second internal chamber 148 may enter the entry way 212 for the second internal passage 156 if there is enough volume of fluid 320 in the second internal chamber 148 for the fluid 320 to fill the space along the second portion 196 of the second inner surface 192. Only once liquid 320 fills the second internal chamber 148 to an appropriate height, can liquid 320 enter the second internal passage 156. In addition, liquid 320 in the second internal space 210 may be sucked back towards the pump cylinder 332 in the suction phase of the pump 316. The Gore mesh valve 162 at the outlet port 106 of at the second end 226 of the vertical portion 22 of the second internal passage 156 allows gas to escape but not fluid 320.

When the pump 316 of the oral irrigator system 300 is full of fluid 320, the water pressure will be high enough to open the outlet valve 338. Highly pressured fluid 320 also comes into the air vent assembly 100 and pushes the first valve 134 against the first exit aperture 174 of the exit channel 146 and pushes the thin walls of the first valve 134 against the valve housing 180 to seal fluid 320 from exiting the air vent assembly 100. Before the first valve 134 fully moves up and completely seals the first exit aperture 174 of the exit channel 146, there may be some pressured fluid 320 which flows past the first exit aperture 174 and into the exit channel 146. This fluid 320 then hits the inner portion 154 of the blocking element 150 and changes direction. The momentum of the fluid 320 is reduced at the inner portion 154 of the blocking element 150 and reduced further at the angled lip 228 when the fluid 320 has to change course again past the angled lip 228 to come up. The small clearance at the inner portion 154 of the blocking element 150 helps to limit the amount of fluid 320 passing. The frustoconical flanged portion 152 of the blocking element 150/ the angled lip 228 acts like an umbrella to trap fluid 320 at the bottom well, whereas gas can easily change direction and move up past the angled lip 228 to escape. If any fluid 320 flows further up in the second internal chamber 148, the fluid 320 has to change course another time at the T shaped second internal passage 156. This T structure in the cap 112 is intended to break the fluid 320 velocity and momentum to slow the fluid 320 down in many stages to limit water coming out of the outlet port 106 of the air vent assembly 100.

In the closed state S2 of the first valve 134 (shown in FIG. 10), gas and/or liquid that is flowing through the first internal passage 114 creates a second pressure P2 on the first end 136 of the first valve 134. Gas and/or liquid also continues to flow out of the cross channels 138 from the first internal passage 114 and into the first internal chamber 144. In the closed state S2, the second pressure P2 creates enough pressure on the first valve 134 to cause the expandable element 178 to push against the housing 180 so that the housing 180 then contacts the first exit aperture 174 of the exit channel 146. The first valve 134 in the closed state S2 blocks the flow of gas and/or fluid into the exit channel 146 from the first internal chamber 144. In the closed state, gas and/or liquid is not expected to move from the first internal chamber 144 to the second internal chamber 148.

When the pump 316 of the oral irrigator 300 is operating at high frequency, the suction and compression phases of the pump 316 change quickly. The first valve 134 seals the exit channel 146, and there is no fluid 320 coming out of the outlet port 106 of the air vent assembly 100 as not much fluid 320 can flow higher in the air vent assembly 100 during the compression phase before it would be sucked back during the suction phase. However, when the pump 316 is operating at low frequency or low voltages, the pressure on the first valve 134 may not be enough to seal the exit channel 146 and some fluid 320 may leak into the second internal chamber 148 and out the outlet port 106 of the air vent assembly 100. The amount of pressure required to open the outlet valve 338, which may be, for example, a spring valve, sets the lowest operating voltage at which the pump 316 can operate without fluid 320 escaping from the outlet port 106 of the air vent assembly 100. The optional Gore mesh valve 162 may prevent fluid 320 from escaping from the air vent assembly 100. It is not expected that the Gore mesh valve 162 would be necessary at high operating frequencies or pressures.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

## Claims

1. An air vent assembly (100) comprising:
a body (102), the body comprising:
a first internal chamber (144) arranged between an input port (104) and an outlet port (106) of the body, wherein the first internal chamber is in fluid communication with the input port and the outlet port and arranged to receive a fluid or a gas, the first internal chamber comprising:
a first inner surface (168) having a first inner surface portion (170) and a second inner surface portion (172); and
a first valve (134) comprising an expandable element (178), the first valve arranged to receive the fluid or the gas and transition from an open state (S1) to a closed state (S2);
an exit channel (146) in fluid communication with the first internal chamber, and arranged between the second inner surface portion of the first inner surface and the outlet port, the exit channel having a first exit aperture (174) arranged within the second inner surface portion of the first inner surface of the first internal chamber;
wherein, in the closed state, the first valve is arranged to contact the first exit aperture and impede a flow of the fluid or gas into the exit channel.

2. The air vent assembly of claim 1, wherein in the open state (S1), the first valve (134) is arranged at a distance from the first exit aperture of the exit channel (146) and arranged to at least partially allow flow of the fluid or the gas into the exit channel.

3. The air vent assembly of claim 1, wherein in the open state (S1) the fluid or the gas exerts a first pressure (P1) on the first valve, and wherein in the closed state (S2) the fluid or the gas exerts a second pressure (P2) on the first valve (134).

4. The air vent assembly of claim 1, wherein the first valve (134) comprises the expandable element having an external surface (186), wherein the external surface is arranged to contact at least a portion of an inner surface (182) of a housing (180) of the first valve, and wherein an outer surface (184) of the housing of the first valve is arranged to contact at least a portion of the first exit aperture of the exit channel in the closed state.

5. The air vent assembly of claim 1, wherein the air vent body (102) comprises one or more radially disposed cross channels (138) arranged between the first valve and a first internal passage (114) in fluid communication with the first valve, the first internal passage having a first end (122) comprising the inlet port and a second end (132) comprising a lip (190); wherein the cross channels are formed by indentations (188) on the lip, wherein the expandable element of the first valve and the housing of the first valve are arranged on the lip; wherein the cross channels are in fluid communication with the first internal passage and the first internal chamber.

6. The air vent assembly of claim 1, wherein the assembly body (102) comprises a second internal chamber (148) arranged between the exit channel and the outlet port and in fluid communication with the exit channel and the outlet port.

7. The air vent assembly of claim 1, wherein the outlet port (106) comprises a second valve (162).

8. The air vent assembly of claim 6, wherein the second internal chamber (148) comprises a blocking element (150) arranged between the exit channel (146) and a second internal passage (156), wherein the second internal passage has a first end (158) in fluid communication with the second internal chamber and a second end (160) in fluid communication with the outlet port.

9. The air vent assembly of claim 8, wherein the blocking element (150) comprises a frustoconical flange portion (152) arranged to prevent the fluid from flowing past the frustoconical flange portion.

10. The air vent assembly of claim 8, wherein the blocking element comprises an inner portion (154) arranged at a distance from the exit channel.

11. An oral irrigator (300) system comprising:
a pump (316) in fluid communication with a reservoir (314) and a channel (346) of the oral irrigator, the pump comprising a pump cylinder (332) in which a pressurized flow is created;
an air vent assembly (100) having an input port (104) in fluid communication with the pump cylinder; wherein the air vent assembly comprises:
a body (102), the body comprising:
a first internal chamber (144) arranged between the input port and an outlet port of the body, wherein the first internal chamber is in fluid communication with the input port and the outlet port and arranged to receive a fluid or a gas, the first internal chamber comprising:
a first inner surface (168) having a first inner surface portion (170) and a second inner surface portion (172); and
a first valve (134) comprising an expandable element (178), the first valve arranged to receive the fluid or the gas and transition from an open state (S1) to a closed state (S2);
an exit channel (146) in fluid communication with the first internal chamber, and arranged between the second inner surface portion of the first inner surface and the outlet port, the exit channel having a first exit aperture (174) arranged within the second inner surface portion of the first inner surface of the first inner chamber;
wherein, in the closed state, the first valve is arranged to contact the first exit aperture and impede a flow of the fluid or gas into the exit channel.

12. The oral irrigator system of claim 11,
wherein in the open state, the first valve (134) is arranged at a distance from the first exit aperture (174) of the exit channel (146) and arranged to at least partially allow flow of the fluid or the gas into the exit channel.

13. The oral irrigator system of claim 11,
wherein the first valve (134) comprises the expandable element (178) having an external surface (186), wherein the external surface is arranged to contact at least a portion of an inner surface (182) of a housing (180) of the first valve, and wherein an outer surface (184) of the housing of the first valve is arranged to contact at least a portion of the first exit aperture of the exit channel in the closed state.

14. The oral irrigator system of claim 11,
wherein the assembly body (102) comprises one or more radially disposed cross channels (138) arranged between the first valve and a first internal passage (114) in fluid communication with the first valve, the first internal passage having a first end (122) comprising the inlet port and a second end (132) comprising a lip (190); wherein the cross channels are formed by indentations (188) on the lip, wherein the expandable element of the first valve and the housing of the first valve are arranged on the lip; wherein the cross channels are in fluid communication with the first internal passage and the first internal chamber.

15. The oral irrigator system of claim 11,
wherein the assembly body (102) comprises a second internal chamber (148) arranged between the exit channel and the outlet port and in fluid communication with the exit channel and the outlet port, and wherein the second internal chamber comprises a blocking element (150) arranged between the exit channel and a second internal passage (156), wherein the second internal passage has a first end (158) in fluid communication with the second internal chamber and a second end (160) in fluid communication with the outlet port.

## Patentansprüche

1. Entlüftungsanordnung (100), umfassend:
einen Körper (102), wobei der Körper umfasst:
eine erste Innenkammer (144), die zwischen einem Eingangsanschluss (104) und einem Auslassanschluss (106) des Körpers angeordnet ist, wobei die erste Innenkammer in Fluidverbindung mit dem Eingangsanschluss und dem Auslassanschluss steht und so angeordnet ist, dass sie ein Fluid aufnimmt oder ein Gas, wobei die erste Innenkammer Folgendes umfasst:
eine erste Innenfläche (168) mit einem ersten Innenflächenabschnitt (170) und einem zweiten Innenflächenabschnitt (172); und ein erstes Ventil (134), dass ein expandierbares Element (178) umfasst, wobei das erste Ventil so angeordnet ist, dass es das Fluid oder das Gas aufnimmt und von einem offenen Zustand (S1) in einen geschlossenen Zustand (S2) übergeht; einen Austrittskanal (146), der in Fluidverbindung mit der ersten Innenkammer steht und zwischen dem zweiten Innenflächenabschnitt der ersten Innenfläche und der Auslassöffnung angeordnet ist, wobei der Austrittskanal eine erste Austrittsöffnung (174) aufweist, die innerhalb der zweiten Innenfläche angeordnet ist Teil der ersten Innenfläche der ersten Innenkammer; wobei das erste Ventil im geschlossenen Zustand so angeordnet ist, dass es die erste Austrittsöffnung berührt und einen Fluss des Fluids oder Gases in den Austrittskanal verhindert.

2. Entlüftungsanordnung nach Anspruch 1, wobei im geöffneten Zustand (S1) das erste Ventil (134) in einem Abstand von der ersten Austrittsöffnung des Austrittskanals (146) angeordnet und so angeordnet ist, dass es zumindest teilweise einen Durchfluss ermöglicht der Flüssigkeit oder des Gases in den Austrittskanal.

3. Entlüftungsanordnung nach Anspruch 1, wobei im geöffneten Zustand (S1) das Fluid oder das Gas einen ersten Druck (P1) auf das erste Ventil ausübt, und wobei im geschlossenen Zustand (S2) das Fluid oder das Gas einen zweiten Druck (P2) auf das erste Ventil (134) ausübt.

4. Entlüftungsanordnung nach Anspruch 1, wobei das erste Ventil (134) das ausdehnbare Element mit einer Außenfläche (186) umfasst, wobei die Außenfläche so angeordnet ist, dass sie mindestens einen Teil einer Innenfläche (182) eines Ventils berührt Gehäuse (180) des ersten Ventils, und wobei eine Außenfläche (184) des Gehäuses des ersten Ventils so angeordnet ist, dass sie im geschlossenen Zustand mindestens einen Teil der ersten Austrittsöffnung des Austrittskanals berührt.

5. Entlüftungsanordnung nach Anspruch 1, wobei der Entlüftungskörper (102) einen oder mehrere radial angeordnete Querkanäle (138) umfasst, die zwischen dem ersten Ventil und einem ersten internen Durchgang (114) in Fluidverbindung mit dem ersten Ventil angeordnet sind. wobei der erste innere Durchgang ein erstes Ende (122) mit der Einlassöffnung und ein zweites Ende (132) mit einer Lippe (190) aufweist; wobei die Querkanäle durch Einkerbungen (188) an der Lippe gebildet werden, wobei das expandierbare Element des ersten Ventils und das Gehäuse des ersten Ventils an der Lippe angeordnet sind; wobei die Querkanäle in Fluidverbindung mit dem ersten Innendurchgang und der ersten Innenkammer stehen.

6. Entlüftungsanordnung nach Anspruch 1, wobei der Anordnungskörper (102) eine zweite Innenkammer (148) umfasst, die zwischen dem Auslasskanal und der Auslassöffnung angeordnet ist und in Fluidverbindung mit dem Auslasskanal und der Auslassöffnung steht.

7. Entlüftungsanordnung nach Anspruch 1, wobei die Auslassöffnung (106) ein zweites Ventil (162) umfasst.

8. Entlüftungsanordnung nach Anspruch 6, wobei die zweite Innenkammer (148) ein Sperrelement (150) umfasst, das zwischen dem Austrittskanal (146) und einem zweiten Innendurchgang (156) angeordnet ist, wobei der zweite Innendurchgang einen ersten aufweist ein Ende (158) in Fluidverbindung mit der zweiten Innenkammer und ein zweites Ende (160) in Fluidverbindung mit der Auslassöffnung.

9. Entlüftungsanordnung nach Anspruch 8, wobei das Sperrelement (150) einen kegelstumpfförmigen Flanschabschnitt (152) umfasst, der so angeordnet ist, dass er verhindert, dass das Fluid an dem kegelstumpfförmigen Flanschabschnitt vorbeiströmt.

10. Entlüftungsanordnung nach Anspruch 8, wobei das Sperrelement einen inneren Abschnitt (154) umfasst, der in einem Abstand vom Austrittskanal angeordnet ist.

11. Mundduschensystem (300), umfassend: eine Pumpe (316), die in Fluidverbindung mit einem Reservoir (314) und einem Kanal (346) der Munddusche steht, wobei die Pumpe einen Pumpenzylinder (332) umfasst, in dem ein Druckstrom erzeugt wird; eine Entlüftungsanordnung (100) mit einer Eingangsöffnung (104), die in Fluidverbindung mit dem Pumpenzylinder steht; wobei die Entlüftungsbaugruppe Folgendes umfasst: einen Körper (102), wobei der Körper umfasst: eine erste Innenkammer (144), die zwischen der Eingangsöffnung und einer Auslassöffnung des Körpers angeordnet ist, wobei die erste Innenkammer in Fluidverbindung mit der Eingangsöffnung und der Auslassöffnung steht und so angeordnet ist, dass sie ein Fluid oder ein Gas, die erste Innenkammer, aufnimmt Kammer bestehend aus: eine erste Innenfläche (168) mit einem ersten Innenflächenabschnitt (170) und einem zweiten Innenflächenabschnitt (172); und ein erstes Ventil (134), dass ein expandierbares Element (178) umfasst, wobei das erste Ventil so angeordnet ist, dass es das Fluid oder das Gas aufnimmt und von einem offenen Zustand (S1) in einen geschlossenen Zustand (S2) übergeht; einen Austrittskanal (146), der in Fluidverbindung mit der ersten Innenkammer steht und zwischen dem zweiten Innenflächenabschnitt der ersten Innenfläche und der Auslassöffnung angeordnet ist, wobei der Austrittskanal eine erste Austrittsöffnung (174) aufweist, die innerhalb der zweiten Innenfläche angeordnet ist Teil der ersten Innenfläche der ersten Innenkammer; wobei das erste Ventil im geschlossenen Zustand so angeordnet ist, dass es die erste Austrittsöffnung berührt und einen Fluss des Fluids oder Gases in den Austrittskanal verhindert.

12. Mundduschensystem nach Anspruch 11, wobei das erste Ventil (134) im geöffneten Zustand in einem Abstand von der ersten Austrittsöffnung (174) des Austrittskanals (146) angeordnet und so angeordnet ist, dass es zumindest teilweise einen Durchfluss ermöglicht der Flüssigkeit oder des Gases in den Austrittskanal.

13. Mundduschensystem nach Anspruch 11, wobei das erste Ventil (134) das ausdehnbare Element (178) mit einer Außenfläche (186) umfasst, wobei die Außenfläche so angeordnet ist, dass sie mindestens einen Teil einer Innenfläche (182) berührt eines Gehäuses (180) des ersten Ventils, und wobei eine Außenfläche (184) des Gehäuses des ersten Ventils so angeordnet ist, dass sie im geschlossenen Zustand mindestens einen Teil der ersten Austrittsöffnung des Austrittskanals berührt.

14. Mundduschensystem nach Anspruch 11, wobei der Baugruppenkörper (102) einen oder mehrere radial angeordnete Querkanäle (138) umfasst, die zwischen dem ersten Ventil und einem ersten internen Durchgang (114) in Fluidverbindung mit dem ersten Ventil angeordnet sind erster interner Durchgang mit einem ersten Ende (122), das die Einlassöffnung umfasst, und einem zweiten Ende (132), das eine Lippe (190) umfasst; wobei die Querkanäle durch Einkerbungen (188) an der Lippe gebildet werden, wobei das expandierbare Element des ersten Ventils und das Gehäuse des ersten Ventils an der Lippe angeordnet sind; wobei die Querkanäle in Fluidverbindung mit dem ersten Innendurchgang und der ersten Innenkammer stehen.

15. Mundduschensystem nach Anspruch 11, wobei der Baugruppenkörper (102) eine zweite Innenkammer (148) umfasst, die zwischen dem Auslasskanal und der Auslassöffnung angeordnet ist und in Fluidverbindung mit dem Auslasskanal und der Auslassöffnung steht, und wobei die Die zweite Innenkammer umfasst ein Sperrelement (150), das zwischen dem Austrittskanal und einem zweiten Innendurchgang (156) angeordnet ist, wobei der zweite Innendurchgang ein erstes Ende (158) in Fluidverbindung mit der zweiten Innenkammer und ein zweites Ende (160) in Fluidverbindung mit der Auslassöffnung aufweist.

## Revendications

1. Un ensemble d'évacuation d'air (100) comprenant:
un corps (102), le corps comprenant:
une première chambre interne (144) disposée entre un orifice d'entrée (104) et un orifice de sortie (106) du corps, dans laquelle la première chambre interne est en contact avec la communication fluide avec l'orifice d'entrée et l'orifice de sortie et agencée pour recevoir un fluide ou un gaz, la première chambre interne comprenant:
une première surface intérieure (168) présentant une première partie de surface intérieure (170) et une deuxième partie de la surface intérieure (172); et une première valve (134) comprenant un élément expansible (178), la première vanne est conçue pour recevoir le fluide ou le gaz et la transition d'un état ouvert (S1) à un état fermé (S2); un canal de sortie (146) en communication fluidique avec la première chambre interne, et disposé entre la deuxième partie de la première surface interne et l'orifice de sortie, le canal de sortie ayant une première ouverture de sortie (174) disposée à l'intérieur de la deuxième partie de la première surface interne de la première chambre interne; dans lequel, à l'état fermé, la première valve est agencée pour entrer en contact avec la première ouverture de sortie et empêcher l'écoulement du fluide ou du gaz dans le canal de sortie.

2. L'ensemble d'évacuation d'air de la revendication 1, dans lequel, à l'état ouvert (S1), la première soupape (134) est disposée à une certaine distance de la première ouverture de sortie du canal de sortie (146) et est disposée pour permettre au moins partiellement l'écoulement du fluide ou du gaz dans le canal de sortie.

3. L'ensemble d'aération de la revendication 1, dans lequel, à l'état ouvert (S1), le fluide ou le gaz exerce une première pression (P1) sur la première soupape, et dans lequel, à l'état fermé (S2), le fluide ou le gaz exerce une seconde pression (P2) sur la première soupape (134).

4. L'ensemble d'évacuation d'air de la revendication 1, dans lequel la première vanne (134) comprend l'élément expansible ayant une surface externe (186), dans lequel la surface externe est conçue pour entrer en contact avec au moins une partie d'une surface interne (182) d'un boîtier (180) de la première vanne, et dans lequel une surface externe (184) du boîtier de la première vanne est conçue pour entrer en contact avec au moins une partie de la première ouverture de sortie du canal de sortie à l'état fermé.

5. L'ensemble d'évents d'air de la revendication 1, dans lequel le corps d'évent d'air (102) comprend un ou plusieurs canaux transversaux (138) disposés radialement entre la première soupape et un premier passage interne (114) en communication fluidique avec la première soupape, le premier passage interne ayant une première extrémité (122) comprenant l'orifice d'entrée et une deuxième extrémité (132) comprenant une lèvre (190); dans laquelle les canaux transversaux sont formés par des indentations (188) sur la lèvre, dans lequel l'élément expansible de la première soupape et le boîtier de la première soupape sont disposés sur la lèvre; dans laquelle les canaux transversaux sont en communication fluidique avec le premier passage interne et la première chambre interne.

6. L'ensemble d'évacuation d'air de la revendication 1, dans lequel le corps de l'ensemble (102) comprend une deuxième chambre interne (148) disposée entre le canal de sortie et l'orifice de sortie et en communication fluide avec le canal de sortie et l'orifice de sortie.

7. L'ensemble d'évacuation d'air de la revendication 1, dans lequel l'orifice de sortie (106) comprend une deuxième soupape (162).

8. L'ensemble d'aération de la revendication 6, dans lequel la deuxième chambre interne (148) comprend un élément de blocage (150) disposé entre le canal de sortie (146) et un deuxième passage interne (156), dans lequel le deuxième passage interne a une première extrémité (158) en communication fluidique avec la deuxième chambre interne et une deuxième extrémité (160) en communication fluidique avec l'orifice de sortie.

9. L'ensemble d'aération de la revendication 8, dans lequel l'élément de blocage (150) comprend une partie de bride tronconique (152) conçue pour empêcher le fluide de s'écouler au-delà de la partie de bride tronconique.

10. L'ensemble d'évacuation d'air de la revendication 8, dans lequel l'élément de blocage comprend une partie intérieure (154) disposée à une certaine distance du canal de sortie.

11. Le système d'irrigation buccale (300) comprenant: une pompe (316) en communication fluidique avec un réservoir (314) et un canal (346) de l'irrigateur buccal, la pompe comprenant un cylindre de pompe (332) dans lequel un flux sous pression est créé; un ensemble de purge d'air (100) ayant un orifice d'entrée (104) en communication fluide avec le cylindre de la pompe ; dans lequel l'ensemble de purge d'air comprend: un corps (102), le corps comprenant: une première chambre interne (144) disposée entre l'orifice d'entrée et l'orifice de sortie du corps, dans laquelle la première chambre interne est en communication fluidique avec l'orifice d'entrée et l'orifice de sortie et est conçue pour recevoir un fluide ou un gaz, la première chambre interne comprenant: une première surface intérieure (168) comportant une première partie de surface intérieure (170) et une deuxième partie de surface intérieure (172); et une première vanne (134) comprenant un élément expansible (178), la première vanne étant conçue pour recevoir le fluide ou le gaz et passer d'un état ouvert (S1) à un état fermé (S2); un canal de sortie (146) en communication fluidique avec la première chambre interne, et disposée entre la deuxième partie de la première surface interne et l'orifice de sortie, le canal de sortie ayant une première ouverture de sortie (174) disposée à l'intérieur de la deuxième partie de la première surface interne de la première chambre interne; dans lequel, à l'état fermé, la première vanne est agencée pour entrer en contact avec la première ouverture de sortie et empêcher l'écoulement du fluide ou du gaz dans le canal de sortie.

12. Le système d'irrigation buccale de la revendication 11, dans lequel, à l'état ouvert, la première vanne (134) est disposée à une certaine distance de la première ouverture de sortie (174) du canal de sortie (146) et est disposée pour permettre au moins partiellement l'écoulement du fluide ou du gaz dans le canal de sortie.

13. Le système d'irrigation buccale de la revendication 11, dans lequel la première vanne (134) comprend l'élément extensible (178) ayant une surface externe (186), dans lequel la surface externe est arrangée pour entrer en contact avec au moins une partie d'une surface interne (182) d'un boîtier (180) de la première vanne, et dans lequel une surface externe (184) du boîtier de la première vanne est arrangée pour entrer en contact avec au moins une partie de la première ouverture de sortie du canal de sortie à l'état fermé.

14. Le système d'irrigation buccale de la revendication 11, dans lequel le corps d'assemblage (102) comprend un ou plusieurs canaux transversaux (138) disposés radialement entre la première vanne et un premier passage interne (114) en communication fluidique avec la première vanne, le premier passage interne ayant une première extrémité (122) comprenant l'orifice d'entrée et une deuxième extrémité (132) comprenant une lèvre (190); dans laquelle les canaux transversaux sont formés par des indentations (188) sur la lèvre, dans laquelle l'élément expansible de la première soupape et le boîtier de la première soupape sont disposés sur la lèvre; dans laquelle les canaux transversaux sont en communication fluidique avec le premier passage interne et la première chambre interne.

15. Le système d'irrigation buccale de la revendication 11, dans lequel le corps d'assemblage (102) comprend une deuxième chambre interne (148) disposée entre le canal de sortie et l'orifice de sortie et en communication fluidique avec le canal de sortie et l'orifice de sortie, et dans lequel la deuxième chambre interne comprend un élément de blocage (150) disposé entre le canal de sortie et un deuxième passage interne (156), dans lequel le deuxième passage interne a une première extrémité (158) en communication fluidique avec la deuxième chambre interne et une deuxième extrémité (160) en communication fluidique avec l'orifice de sortie.
